# EUROPÄISCHE PATENTSCHRIFT

(11) **EP 4 015 121 B1**
(45) Veröffentlichungstag und Bekanntmachung des Hinweises auf die Patenterteilung: **30.04.2025**
(21) Anmeldenummer: 20215337.5
(22) Anmeldetag: 18.12.2020
(51) Int. Cl.: B23B 51/10

(54) **DRUCKMITTELGESTEUERTES SENKWERKZEUG MIT MESSER-ZENTRIERUNG**
COMPRESSED MEDIUM LOWERING TOOL WITH BLADE CENTERING
OUTIL DE CHANFREINAGE À COMMANDE PAR PRESSION À CENTRAGE DES LAMES

(43) Veröffentlichungstag der Anmeldung: 22.06.2022
(73) Patentinhaber: HEULE Werkzeug AG, 9436 Balgach (CH)
(72) Erfinder: STUDER, Harry, 9436 Balgach (CH)
(74) Vertreter: Riebling, Peter

(56) Entgegenhaltungen:
- EP-A2- 2 161 090
- DE-B4- 102008 044 802
- US-A- 3 572 182
- US-A1- 2017 173 707

## Beschreibung

Gegenstand der Erfindung ist ein druckmittelgesteuertes Senkwerkzeug nach dem Oberbegriff der Patentansprüche 1 und 2.

Ein solches Senkwerkzeug ist beispielsweise mit der US 3 572 182 A bekannt.

Ferner bezieht sich die Erfindung auf ein Senkwerkzeug mit einem oder mit zwei ausschwenkbaren Messern, wobei jedes Messer von einer eigenen Kolben-Zylindereinheit betätigt werden kann oder auch beide Messer zusammen von einer einzigen Kolben-Zylindereinheit betätigbar sind.

Bei der Anordnung von zwei Messern wird es ferner bevorzugt, wenn das eine Messer an der Vorderseite eines im Messergehäuse angeordneten Messerfensters ausgeschwenkt werden kann, während das andere Messer mit einem komplementären Bewegungsablauf aus der Rückseite des Messerfensters ausgeschwenkt werden kann.

Der einfacheren Beschreibung wegen wird in der folgenden Beschreibung jedoch davon ausgegangen, dass lediglich ein Messer vorhanden ist, dem eine mit einem Druckmittel betätigte Kolben-Zylindereinheit zugeordnet ist, obwohl die Erfindung nicht an die Anordnung eines einzigen Messers beschränkt ist. Bezüglich der Betriebsweise eines solchen druckmittelgesteuerten Senkwerkzeuges wird allgemein auf den Gegenstand der DE 10 2009 012 996 A1 verwiesen.

In der auf den gleichen Anmelder zurückgehenden EP 2 589 451 B1 wird ein weiteres druckmittelgesteuertes Senkwerkzeug mit einer Kolben-Zylindereinheit beschrieben, wobei im Hinblick auf den Aufbau und auf die Betriebsweise auf den Offenbarungsinhalt der EP 2 589 451 B1 verwiesen wird.

Die vorliegende Erfindung ist jedoch nicht auf ein unter Fliehkraft ausschwenkbares Messer eines Senkwerkzeuges beschränkt. Die Erfindung sieht deshalb auch druckmittelgesteuerte Senkwerkzeuge vor, bei denen entweder der Ausschwenkvorgang oder der Rückschwenkvorgang oder auch beide Schwenkvorgänge mit einer beliebigen Antriebskraft ausgeführt werden. Die genannten, auf den gleichen Anmelder zurückgehenden druckmittelgesteuerten Senkwerkzeuge können im Hinblick auf die Senkgenauigkeit und die Reproduzierbarkeit der angefertigten Senkung in einer Bohrung eines Werkstückes optimiert werden.

Bei einem Betrieb von Senkwerkzeugen nach dem Gegenstand der DE 10 2009 012 996 A1 oder der EP 2 589 451 B1 hat sich herausgestellt, dass ein notwendiges Spiel in der Lagerbohrung für die Schwenklagerung des mindestens einen Messers vorhanden sein muss, um das (mindestens eine) Messer störungsfrei aus dem Messerfenster ausschwenken zu können, ohne den Bruch des Messerlagers zu riskieren. Dies erbrachte eine maximale Senkgenauigkeit und eine Senkreproduzierbarkeit von +/- 0,2 mm.

Der Erfindung liegt deshalb die Aufgabe zugrunde, ein druckmittelgesteuertes Senkwerkzeug der eingangsgenannten Art so weiterzubilden, dass die Senkgenauigkeit und die Senkreproduzierbarkeit wesentlich verbessert ist.

Zur Lösung der gestellten Aufgabe ist die Erfindung durch die technische Lehre der Ansprüche 1 und 2 gekennzeichnet.

Durch die erfindungsgemäße technische Lehre wird erstmals der Vorteil erreicht, dass eine Senkgenauigkeit von minimal +/- 0,1 mm erreicht werden kann. Dies ist ein wesentlicher Fortschritt, denn bisher waren derartige Senkgenauigkeiten mit druckmittelgesteuerten Senkwerkzeugen nicht erreichbar. Durch Anbringen einer ausschließlich radial wirkenden Messerzentrierung im Messergehäuse wird das Messer im Zerspanungsprozess formschlüssig und spielfrei zentriert. Das notwendige axiale Spiel im Messerlager kann dabei aber gleichzeitig erhalten werden.

Diese Zentrierung ermöglicht eine sehr hohe Reproduzierbarkeit der Senkung mit wenig Streuung. Durch entsprechende Fertigungsgenauigkeit ermöglicht diese Zentrierung auch eine absolute Senkgenauigkeit, welche die erweiterten Anforderungen am Markt erfüllt.

Durch den Zerspanungsprozess entsteht eine axiale Zerspanungskraft auf das Messer, welche das Messer - in einer ersten bevorzugten Ausführung - mit seiner Zentriernut gegen einen gehäuseseitigen Zentrierbolzen im Messergehäuse drückt und in seiner Zentrierachse formschlüssig zentriert und festlegt. Dabei legen sich die rund profilierten Anlageflächen der im Messer angeordneten, quer verlaufenden Zentriernut formschlüssig an komplementäre, ebenfalls rund verlaufende Anlageflächen eines gehäuseseitigen Zentrierbolzens an und zentrieren das Messer in seiner in Längsrichtung des Messers verlaufenden Zentrierachse auf dem gehäuseseitigen Zentrierbolzen.

Somit sichert die erfindungsgemäße Zentriervorrichtung das Messer gegen eine radiale Verschiebung entlang der Zentrierachse.

Anders ausgedrückt heißt dies, dass die erfindungsgemäße Zentriervorrichtung das Messer gegen ein Verschiebungsspiel des Lagerbolzens in der grundkörperseitigen Lagerbohrung sichert.

Die Zentriervorrichtung ist bevorzugt so ausgebildet, dass sie im ausgeschwenkten Arbeitszustand des Messers eine formschlüssige Zentrierung des Messers in der Zentrierachse ausführt, wobei im eingeschwenkten Zustand eine solche Zentrierung nicht notwendig ist.

Die Zentriervorrichtung ist dabei bevorzugt im Abstand vom spielbehafteten Lagerbolzen in der Lagerbohrung angeordnet.

Neben der oben beschriebenen, ersten bevorzugten Ausführungsform gibt es für die Ausbildung der Zentriervorrichtung mehrere weitere Ausführungsformen, wobei allen Ausführungsformen gemeinsam ist, dass es zu einem formschlüssigen Eingriff von am Messer angeordneten Vorsprüngen oder Rücksprüngen in zugeordnete messergehäuseseitige Rück- oder Vorsprünge mindestens im ausgeschwenkten Zustand des mindestens einen Messers kommt.

In der ersten bevorzugten Ausgestaltung der Erfindung ist es vorgesehen, dass die Zentriervorrichtung aus einer fußseitig an der Unterseite des Messers angeordneten Zentriernut besteht, die in der Zerspanungsstellung in formschlüssigem Eingriff mit einem gehäuseseitigen Zentrierbolzen ist und dass der Zentrierbolzen rund profiliert ist und mit seinem oberen Teil seines Außenumfangs aus einer gehäuseseitigen Aufnahmebohrung herausragt und dort eine komplementäre Zentrierfläche für den Eingriff in die Zentriernut bildet.

Die fußseitige Zentriernut kann demnach als Quernut im Fußbereich des Messers ausgebildet und wirkt mit einem Formschlusseingriff mit einem Teil eines gehäuseseitigen Zentrierbolzens zusammen.

Hierauf ist die Erfindung nicht beschränkt. In einer anderen Ausgestaltung der Erfindung kann die kinematische Umkehrung der ersten Ausführung vorgesehen sein, bei der an der Fußseite des Messers der Zentrierbolzen angeordnet ist, der in eine gehäuseseitige quer verlaufende Zentriernut in Eingriff bringbar ist.

Bei dieser Ausführung ist es von besonderem Vorteil, wenn der Zentrierbolzen rund profiliert ist und mit dem oberen Teil seines Außenumfangs aus seiner Aufnahmebohrung (am Messer) herausragt und dort eine komplementäre Zentrierfläche für den Eingriff in die Zentriernut (am Gehäuse) bildet.

Der einfacheren Beschreibung wegen wird in der folgenden Beschreibung von der ersten kinematischen Ausbildung ausgegangen, bei der nämlich der Zentrierbolzen auf der Gehäuseseite angeordnet ist und in einer gehäuseseitigen Aufnahmebohrung eingepasst ist und die komplementäre Zentriernut als quer verlaufende Zentriernut an der Fußseite des Messers ausgebildet ist. Diese vereinfachte Beschreibung erfolgt lediglich der Vereinfachung wegen, ohne dass die Erfindung auf diese eine kinematische Ausführung beschränkt ist.

Die Anbringung eines Zentrierbolzens an der Gehäuseseite ist jedenfalls fertigungstechnisch einfacher als die Anbringung eines solchen Zentrierbolzens an der Fußseite eines Messers.

Bei der gehäuseseitigen Anbringung des Zentrierbolzens wird es bevorzugt, wenn dieser auswechselbar ausgebildet ist. Er kann somit aus seiner Querbohrung in Richtung seiner Längserstreckung herausgezogen werden. Somit kann der Zentrierbolzen unterschiedliche Materialeigenschaften im Vergleich zum Material des Messers aufweisen und kann darüber hinaus bei Verschleißerscheinungen ausgewechselt werden.

Der Zentrierbolzen kann auch als federndes Element ausgebildet sein, welches in die als Quernut ausgebildete Zentriernut an der Fußseite des Messers im ausgeschwenkten Zustand einschnappt. Dabei kann es sich um eine rastende Übertotpunktverbindung handeln.

In einer weiteren Ausgestaltung der Erfindung ist vorgesehen, dass die Zentriervorrichtung entweder aus einer oberseitig oder einer fußseitig am Messer angeordneten Zentrierausprägung besteht, die in der Zerspanungsstellung mit einer gehäuseseitigen, komplementären Zentriernut in formschlüssigen Eingriff bringbar ist.

Beim Betrieb hat sich herausgestellt, dass mit der durch den Zerspanungsprozess entstehenden axialen Zerspanungskraft das Messer mit seiner Zentriernut oder seiner Zentrierausprägung gegen den Zentrierbolzen oder gegen die Zentriernut im Messergehäuse drückt und das Messer in der Zentrierachse formschlüssig im Messergehäuse zentriert und festlegt. Dabei wurde festgestellt, dass die Hauptzerspanungskräfte über Anlagestellen im Messerfenster in das Messergehäuse übertragen werden und nicht über das Schwenklager, bestehend aus Lagerbolzen und Aufnahmebohrung. Dies war der Grund, warum ursprünglich bei den zum Stand der Technik gehörenden Senkwerkzeugen ausreichend Spiel im Messerlager vorgesehen werden musste. Erfindungsgemäß ist jedoch nun vorgesehen, dass der noch einzig verbleibende, radial wirkende und das Senkergebnis beeinflussende Freiheitsgrad mit der neuen Zentriereinrichtung aufgehoben wird.

Die Entfernung von Spänen, die beim Gegenstand der DE 10 2009 012 996 A1 eine große Rolle spielte, spielt im aktuellen System nur eine untergeordnete Rolle, weil eine ausreichende Spülfunktion mit den vorhandenen Kühlschmiermitteln im Zerspanungsprozess vorgesehen ist. Auf diese Weise wird sichergestellt, dass die erfindungsgemäßen Zentriervorrichtungen von Spänen freigehalten werden. Dabei spielt auch der formschlüssige und damit abdichtende Eingriff der messerseitigen Zentrierteile in die zugeordneten gehäuseseitigen, komplementären Zentrierteile eine Rolle, weil durch den formschlüssigen Eingriff die Zentriervorrichtung vor Eindringen von Spänen geschützt ist.

Die Zentriervorrichtung dichtet sich sozusagen während des Zerspanungsprozesses selbst ab, weil ein formschlüssiger Eingriff das Eindringen von Spänen in die Zentriereinrichtung verhindert. Sollte es zu einer Ablagerung von Spänen in der Zentriervorrichtung kommen, werden diese beim Einschwenken des Messers in die Zentriervorrichtung ausgeräumt.

Wenn in einem der Unteransprüche lediglich die Entgratung einer Bohrung im Rückwärts-Senkbetrieb beschrieben wird, so ist dies nicht einschränkend zu verstehen. Die Erfindung bezieht sich auf sämtliche Betriebsweisen eines Senkwerkzeuges, unabhängig davon, ob die Entgratung im Vorwärts- oder im Rückwärts-Senkbetrieb erfolgt.

In einer weiteren bevorzugten Ausgestaltung kann es vorgesehen sein, dass noch zusätzliche, weitere Zentriervorrichtungen zur Zentrierung des Messers in der Zentrierachse an den Seitenflächen des Messerfensters angeordnet sind.

Damit ist vorgesehen, dass nicht nur die erfindungsgemäßen dach- oder fußseitigen Zentriervorrichtungen zwischen dem mindestens einen Messer und den zugeordneten Flächen im Messergehäuse vorgesehen sind, sondern darüber hinaus auch noch senkrecht hierzu angeordnete weitere Zentriervorrichtungen, die in den Seitenflächen des Messerfensters angeordnet sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch ein druckmittelgesteuertes Senkwerkzeug mit radialer Zentrierung des Messers
- Figur 2:: perspektivische Darstellung des Messers
- Figur 3:: eine bevorzugte Ausführungsform eines Messers in perspektivischer Darstellung
- Figur 4:: die Seitenansicht des Messers nach Figur 3 mit Darstellung weiterer Einzelheiten
- Figur 5:: das Senkwerkzeug nach Figur 1 mit eingefahrenem Messer
- Figur 6:: das Senkwerkzeug nach Figur 1 mit einem ausgefahrenen Messer, welches sich in der Senkstellung befindet
- Figur 7a:: die gleiche Darstellung wie Figur 6 mit der Angabe eines Zeichnungsdetails Z
- Figur 7b:: das Zeichnungsdetail Z aus Figur 7a
- Figur 8:: eine gegenüber Figur 6 abgewandelte erste Ausführungsform
- Figur 9:: eine gegenüber Figur 6 abgewandelte zweite Ausführungsform

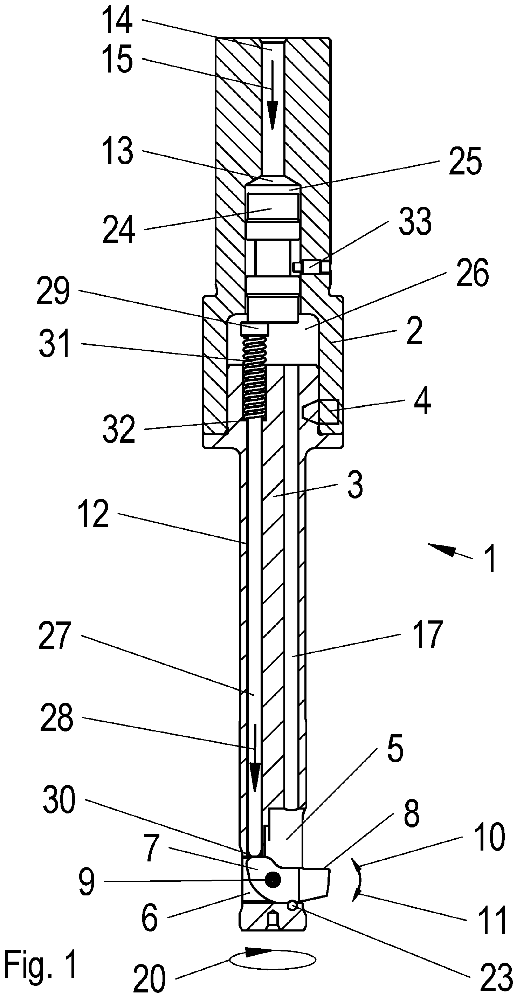

In Figur 1 ist die bevorzugte Ausführungsform eines Senkwerkzeugs 1 dargestellt, welches im Wesentlichen aus einem zylindrischen Grundkörper 2 besteht, der um seine Längsachse in Pfeilrichtung 20 und in Gegenrichtung hierzu rotierend angetrieben ist, wobei im oberen Bereich des Grundkörpers 2 eine Zuführbohrung 14 angeordnet ist, durch welche ein Druckmittel 13 in Pfeilrichtung 15 in einen Zylinderraum 25 des Grundkörpers 2 gepresst wird.

Im Zylinderraum 25 ist ein Kolben 24 in Richtung der Längserstreckung des Grundkörpers verschiebbar gelagert und treibt bei seiner Verschiebung über eine geeignete Kolbenstange, an der ein Druckelement befestigt ist, ein Kopfstück 29 an, welches Teil eines Steuerbolzens 27 ist, der in einer Längsbohrung 12 des Grundkörpers verschiebbar angetrieben ist und dessen Bolzenende 30 auf das freie, schwenkbare Ende eines schwenkbar auf einem Lagerbolzen 9 gelagerten Messers 7 wirkt. Die Betätigung des Steuerbolzens 27 in Pfeilrichtung 28 erfolgt entgegen der Kraft einer Druckfeder 31, deren unteres Ende an einem gehäuseseitigen Anschlag 32 anliegt. Auf diese Weise ist die federbelastete Rückholung des Steuerbolzens 27 gewährleistet, wenn die Druckmittelaufgabe des Druckmittels 13 auf den Kolben 24 entfällt. Statt einer Federrückholung können auch andere Rückstellantriebe verwendet werden.

Zur Begrenzung des Hubs des Kolbens 24 ist eine Anschlagschraube 33 im Grundkörper 2 eingeschraubt, die mit ihrem bolzenseitigen Ende in den Verschiebungsweg des Kolbens 24 hineinragt.

Im Grundkörper 2 ist ferner ein Zylinderraum 26 angeordnet, der von dem Druckmittel 13 in der Art eines Spülmittelstromes durchströmt ist, das über eine im verlängerten Teil des Messergehäuses 3 verlaufende Bypassbohrung 17 nach unten in die Messerkammer 5 gerichtet ist. Auf diese Weise ist sichergestellt, dass die Messerkammer 5 ausreichend mit dem Druckmittel 13 gespült wird und die gesamte Messerkammer 5 von Spänen freigehalten wird.

Das Messergehäuse 3 ist bevorzugt lösbar am Grundgehäuse 2 angeordnet und zur Verbindung der beiden Teile dient mindestens eine Befestigungsschraube 4.

Die Figur 1 zeigt das aus dem Messerfenster 6 herausgeschwenkte Messer 7 in seiner Zerspanungsstellung, wobei das gesamte Senkwerkzeug 1 in Drehrichtung 20 drehend angetrieben ist.

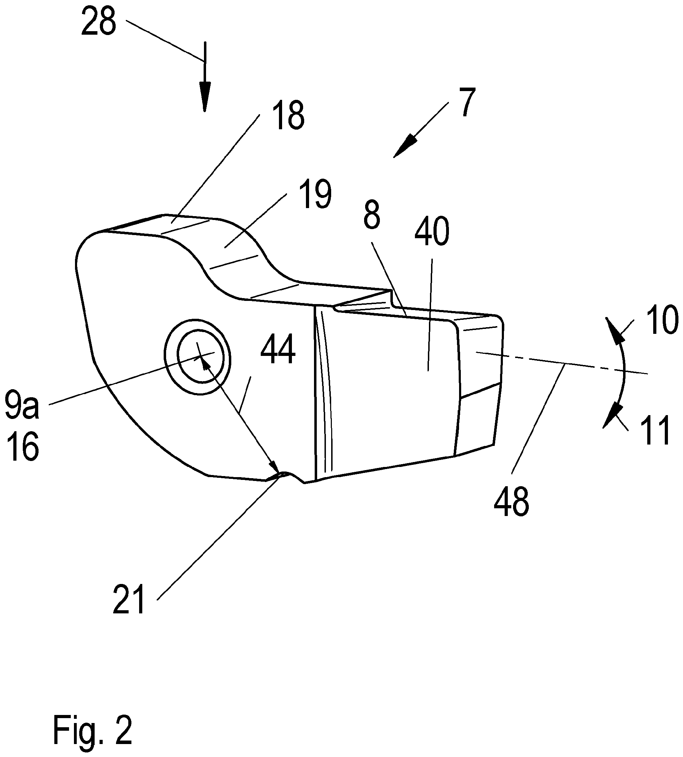

Das Messer 7 ist mit einem Lagerbolzen 9 in einer zugeordneten Lagerbohrung 16 (siehe Figur 2) schwenkbar gelagert, wobei die beiden Teile 9, 16 eine horizontale Schwenkachse 9a bilden.

Im Zerspanungsprozess kommt die seitliche Schneidkante 8 am Messer 7 in Eingriff mit einem nicht näher dargestellten Bohrungsrand einer Bohrung, deren Rand entgratet und/oder angesenkt wird.

Beim Stand der Technik hatte das in der Senkstellung ausgeschwenkte Messer 7 noch einen unerwünschten Freiheitsgrad in der Lagerbohrung 16, der nun durch die erfindungsgemäßen Zentriervorrichtungen beseitigt wird.

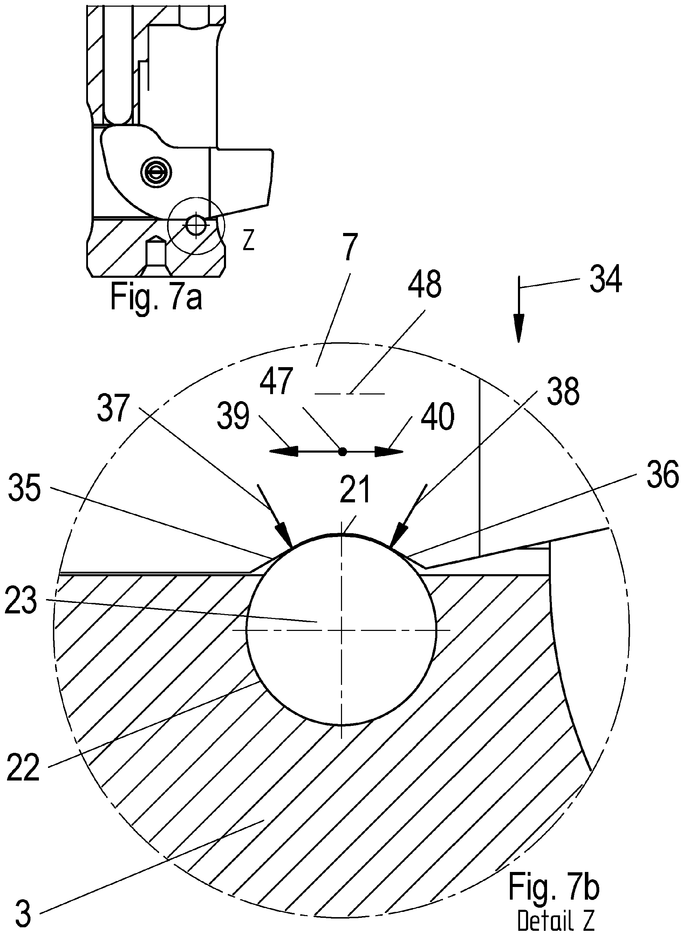

Der unerwünschte Freiheitsgrad ist in Figur 7b als radiale Verschiebung 47 in den Pfeilrichtungen 39, 40 entlang der Zentrierachse 48 dargestellt. Erfindungsgemäß besteht die Zentriervorrichtung in der bevorzugten ersten Ausführungsform aus einer fußseitig an der Unterseite des Messers 7 eingebrachten Zentriernut 21, die als Quernut ausgebildet ist und deren Längserstreckung parallel zur Längserstreckung des Lagerbolzens und der Lagerbohrung 16 ist.

Um das Bewegungsspiel in den Pfeilrichtungen 39, 40 auszuschalten und eine Zentrierung entlang der Zentrierachse 48 zu gewährleisten, ist vorgesehen, dass in der eingezeichneten Zerspanungsstellung eine am Boden des Messerfensters 6 eingebrachte, mindestens halboffene Aufnahmebohrung 22 (siehe Figur 7b) einen bevorzugten rund profilierten Zentrierbolzen 23 aufnimmt, der lediglich mit seinem oberen Außenumfang aus der Aufnahmebohrung 22 herausragt, um mit seinem umfangsseitigen Zentrierflächen eine Zentrierung an den komplementären Anlageflächen 35, 36 der Zentriernut 21 zu gewährleisten.

Aus Figur 2 ergibt sich noch, dass das Bolzenende 30 des Steuerbolzens 27 auf voneinander beabstandete Steuerflächen 18, 19 wirkt, um das Messer von der ausgefahrenen Zerspanungsstellung in Pfeilrichtung 10 in seine eingeschwenkte Lage zu bewegen.

Aus der Figur 7a in Verbindung mit der Figur 7b sind weitere Einzelheiten erkennbar.

Durch den Zerspanungsprozess entsteht eine axiale Zerspanungskraft 34, welche das Messer 7 mit der Zentriernut 21 gegen den Zentrierbolzen 23 im Messergehäuse 3 drückt und sowohl in Pfeilrichtung 39 als auch in Pfeilrichtung 40 formschlüssig zentriert und festlegt, wodurch eine in diesen Richtungen 39, 40 wirkende radiale Verschiebung 47 beseitigt wird und eine Zentrierachse 48 definiert wird, welche eine Verschiebung des Messers 7 in den Pfeilrichtungen 39, 40 im Messergehäuse 3 verhindert.

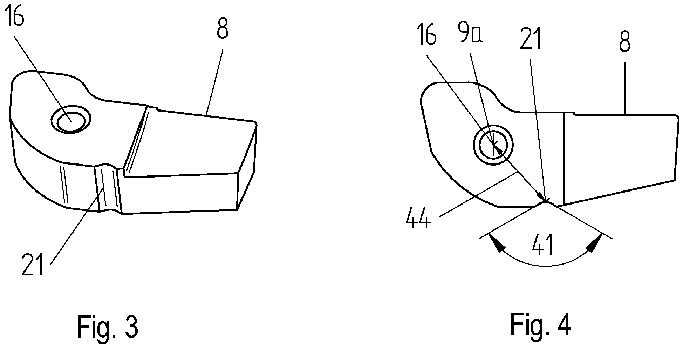

Dabei zeigen die Figuren 3 und 4 das Messer 7 mit seiner seitlichen Schneidkante 8, wo erkennbar ist, dass die bevorzugte Zentriernut 21 als Quernut an der Fußseite des Messers im Abstand 44 von der Lagerbohrung 16 angeordnet ist. Die Zentriernut 21 hat einen Zentrierwinkel 41, der komplementär zum Außenumfang des Zentrierbolzens 23 ist, der im Wesentlichen spielfrei, jedoch bevorzugt auswechselbar, in einer Aufnahmebohrung 22 im Messergehäuse 3 gelagert ist.

Lediglich der obere Außenumfang des Zentrierbolzens 23 ragt aus der Aufnahmebohrung 22 heraus, um so bei den messerseitigen Anlagestellen 37, 38 komplementäre Anlageflächen zum Außenumfang des Zentrierbolzens 23 zu erbringen.

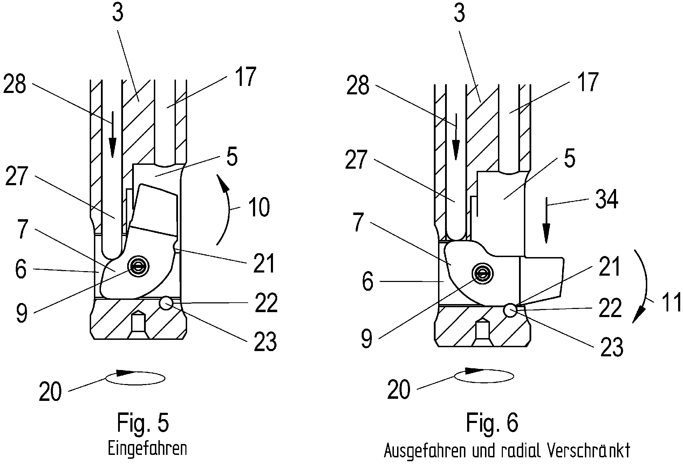

Die Figur 5 zeigt im Vergleich zur Figur 6, dass im eingeschwenkten Zustand des Messers nach Figur 5 die Zentriervorrichtung außer Eingriff ist, d. h. der gesamte schwenkbare Teil des Messers 7 ist in der Messerkammer 5 aufgenommen.

Erst wenn das Messer 7 nach Figur 6 in Pfeilrichtung 11 in seine ausgefahrene und radial zentrierte Zerspanungsstellung kommt, kommt es zu einem formschlüssigen Eingriff der Anlagestellen 37, 38 des Messers 7 auf dem oberen Außenumfang des Zentrierbolzens 23 gemäß Figur 7b.

In Figur 7b sind die eben beschriebenen Verhältnisse zeichnerisch dargestellt, wobei auch symbolisch eine Zentrierachse 48 angedeutet ist, welche die mit den Pfeilen 39, 40 symbolisierte radiale Verschiebung 47 beseitigt und das Messer zentrisch und formschlüssig auf dem oberen Außenumfang des Zentrierbolzens 23 hält.

Der Zentrierbolzen 23 kann dabei spielfrei in eine zugeordnete Passung der Aufnahmebohrung 22 eingepasst sein. Das bedeutet, er hat in der Aufnahmebohrung 22 kein Bewegungsspiel und sitzt dort fest.

In einer anderen, nicht zeichnerisch dargestellten Ausführungsform kann der Zentrierbolzen 23 jedoch auch auswechselbar in der Aufnahmebohrung 22 aufgenommen sein. Er kann dann zwecks Auswechslung mit einem geeigneten Werkzeug aus der Aufnahmebohrung 22 herausgeschlagen werden.

Das Material des Zentrierbolzens 23 ist im Übrigen unabhängig von dem Material des Messergehäuses 3, was bedeutet, dass der Zentrierbolzen 23 auch aus einem gehärteten Metallmaterial bestehen kann. Er kann auch aus einem weicheren Metall als vergleichsweise das Material des Messers bestehen. Er kann auch aus einem Kunststoffmaterial bestehen.

In einer anderen, nicht näher zeichnerisch dargestellten Ausführungsform kann es auch vorgesehen sein, dass der Zentrierbolzen 23 als Federbolzen ausgebildet ist, so dass sein Außenumfang federbelastet radial auswärts vorgespannt ist. Beim Aufsetzen der an der Fußseite des Messers 7 angeordneten Zentriernut 21 auf den als Federbolzen ausgebildeten Zentrierbolzen 23 kommt es zu einer formschlüssigen Schnappverbindung zwischen der messerseitigen Nut und dem gehäuseseitigen Federbolzen. Beim Verschwenken des Messers in Pfeilrichtung 10 in seine eingeschwenkte Lage gemäß Figur 5 wird diese Schnappverbindung wieder aufgelöst.

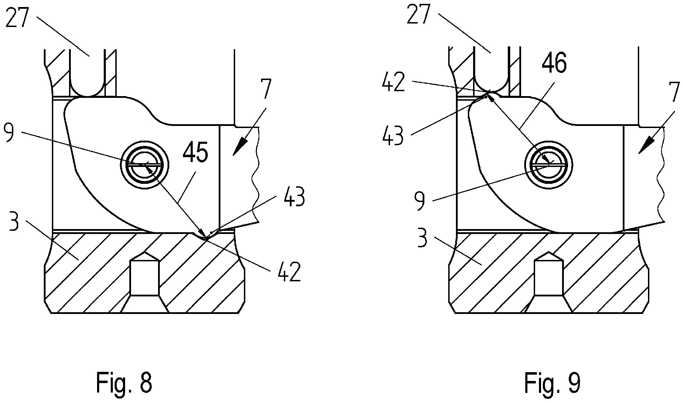

Die Figuren 8 und 9 zeigen zwei weitere Ausführungsformen einer Zentriervorrichtung, wo nach Figur 8 erkennbar ist, dass die Zentriervorrichtung im Abstand 45 von der Schwenkachse 9a des Lagerbolzens 9 aus einer an der Fußseite des Messers 7 angeformten Ausprägung 43 besteht, die sich nicht notwendigerweise über die gesamte Breite des Messers erstrecken muss. Sie kann auch punktförmig vorhanden sein oder aus mehreren voneinander beabstandet angeordneten Zentrierausprägungen 43 bestehen. Die von der Fußseite des Messers 7 hervorstehenden ein oder mehrere von der Fußseite hervorstehenden Zentrierausprägungen 43 greifen dann formschlüssig in zugeordnete, komplementäre Zentriernuten 42 oder Zentrierausprägungen ein, die versenkt in der Bodenfläche des Messerfensters 6 angeordnet sind. Dafür gibt es ebenfalls verschiedene Möglichkeiten.

Es können eine oder mehrere halboffene Zentriernuten an der Fußseite des Messerfensters 6 nebeneinander liegend und in einer gleichen Querlinie ausgerichtet angeordnet sein.

In einer anderen Ausgestaltung kann es vorgesehen sein, dass sich die eine, vertieft in der Fußseite des Messerfensters eingeformte Zentriernut 42 über die gesamte Breite des Messerfensters erstreckt.

Die gleiche Darstellung gilt auch für eine kinematische Abwandlung der in Figur 9 dargestellten Zentrierausnehmung. Dort ist - unter Verwendung der gleichen oben stehend gegebenen Informationen - zu entnehmen, dass die Zentrieranordnung 42, 43 nicht an der Fußseite des Messers 7 angeordnet ist, sondern an der gegenüberliegenden Seite, nämlich im Abstand 46 von der Schwenkachse 9a des Lagerbolzens 9. Für die Ausbildung der dort gezeigten Teile der Zentriervorrichtung gelten die gleichen Informationen, wie sie anhand der Zentriervorrichtung 42, 43 in Figur 8 gegeben wurden.

Insgesamt wurde mit der Anordnung der hier beschriebenen Zentriervorrichtungen 21, 23; 42, 43 eine genau definierte Zentrierachse 48 geschaffen und eine radiale Verschiebung 47 in den Pfeilrichtungen 39, 40 wirksam beseitigt.

Wichtig ist, dass die Zentriervorrichtung das Messer vor Verschiebung entlang der Zentrierachse 48 schützt und nicht vor Verkantung. Eine Verkantung muss durch die Zentriervorrichtung nicht aufgenommen bzw. aufgehoben werden, weil sich das Messer in dieser Richtung jeweils an die linke und rechte Fläche der Messerfensters anlegt und somit sein Freiheitsgrad ausreichend eingeschränkt ist.

Damit konnte die Senkgenauigkeit um den Faktor 10 im Vergleich zu den üblichen Senkwerkzeugen nach dem Stand der Technik verbessert werden.

### Zeichnungslegende

1 Senkwerkzeug
2 Grundkörper
3 Messergehäuse
4 Befestigungsschraube
5 Messerkammer
6 Messerfenster
7 Messer
8 Schneidkante
9 Lagerbolzen
9a Schwenkachse
10 Pfeilrichtung
11 Pfeilrichtung
12 Längsbohrung
13 Druckmittel
14 Zuführbohrung
15 Pfeilrichtung
16 Lagerbohrung (von 7)
17 Bypassbohrung
18 Steuerfläche
19 Steuerfläche
20 Drehrichtung
21 Zentriernut (von 7)
22 Aufnahmebohrung (von 3)
23 Zentrierbolzen
24 Kolben
25 Zylinderraum
26 Zylinderraum
27 Steuerbolzen
28 Pfeilrichtung (von 27)
29 Kopfstück (von 27)
30 Bolzenende (von 27)
31 Druckfeder
32 Anschlag
33 Anschlagschraube
34 axiale Zerspanungskraft
35 Anlagefläche 1 (von 21)
36 Anlagefläche 2 (von 21)
37 Anlagestelle 1
38 Anlagestelle 2
39 Pfeilrichtung
40 Pfeilrichtung
41 Zentrierwinkel
42 Zentriernut (von 3)
43 Zentrierausprägung (von 7)
44 Abstand (zw. 9a und 21)
45 Abstand (zw. 9a und 42, 43)
46 Abstand (zw. 9a und 42, 43)
47 radiale Verschiebung
48 Zentrierachse

## Patentansprüche

1. Druckmittel gesteuertes Senkwerkzeug (1) mit einem oder mehreren, in einem drehbar angetriebenen Grundkörper (2) angeordneten, spanabhebenden Messern (7), die durch Zuführung eines Druckmittels (13) in ihrer Schwenklage betätigbar sind, wobei die Betätigung des mindestens einen Messers (7) über mindestens eine vom Druckmittel (13) betätigte Kolben-Zylindereinheit (24, 25) erfolgt, wobei das mindestens eine Messer (7) auf einem, eine Schwenkachse (9a) ausbildenden Lagerbolzen (9) schwenkbar gelagert ist und aus einem im Messergehäuse (3) angeordneten Messerfenster (6) ausschwenkbar ist, wobei im radialen Abstand (44, 45, 46) von der Schwenkachse (9a) und im Schwenkbereich des mindestens einen Messers (7) eine Zentriervorrichtung (21, 23, 42, 43) zwischen dem Messer (7) und dem Messerfenster (6) des Messergehäuses (3) angeordnet ist, **dadurch gekennzeichnet, dass** die Zentriervorrichtung (21, 23) aus einer fußseitig an der Unterseite des Messers (7) angeordneten Zentriernut (21) besteht, die in der Zerspanungsstellung in formschlüssigem Eingriff mit einem gehäuseseitigen Zentrierbolzen (23) ist und dass der Zentrierbolzen (23) rund profiliert ist und mit seinem oberen Teil seines Außenumfangs aus einer gehäuseseitigen Aufnahmebohrung (22) herausragt und dort eine komplementäre Zentrierfläche für den Eingriff in die Zentriernut (21) bildet.

2. Druckmittel gesteuertes Senkwerkzeug (1) mit einem oder mehreren, in einem drehbar angetriebenen Grundkörper (2) angeordneten, spanabhebenden Messern (7), die durch Zuführung eines Druckmittels (13) in ihrer Schwenklage betätigbar sind, wobei die Betätigung des mindestens einen Messers (7) über mindestens eine vom Druckmittel (13) betätigte Kolben-Zylindereinheit (24, 25) erfolgt, wobei das mindestens ein Messer (7) auf einem, eine Schwenkachse (9a) ausbildenden Lagerbolzen (9) schwenkbar gelagert ist und aus einer im Messergehäuse (3) angeordneten Messerfenster (6) ausschwenkbar ist, wobei im radialen Abstand (44, 45, 46) von der Schwenkachse (9a) und im Schwenkbereich des mindestens einen Messers (7) eine Zentriervorrichtung (21, 23, 42, 43) zwischen dem Messer (7) und dem Messerfenster (6) des Messergehäuses (3) angeordnet ist, **dadurch gekennzeichnet, dass** an der Fußseite des Messers (7) ein Zentrierbolzen angeordnet ist, der in eine gehäuseseitige quer verlaufende Zentriernut (42) in Eingriff bringbar ist.

3. Druckmittel gesteuertes Senkwerkzeug (1) nach Anspruch 1, **dadurch gekennzeichnet, dass** die Zentriernut (21) als Quernut an der Fußseite des Messers (7) im Abstand (44) von der Lagerbohrung (16) angeordnet ist.

4. Druckmittel gesteuertes Senkwerkzeug (1) nach Anspruch 1 oder 2, **dadurch gekennzeichnet, dass** die Zentriernut (21) als Quernut ausgebildet ist und deren Längserstreckung parallel zur Längserstreckung des Lagerbolzens (9) und der Lagerbohrung (16) ist.

5. Druckmittel gesteuertes Senkwerkzeug (1) nach einem der Ansprüche 1, 3 oder 4, **dadurch gekennzeichnet, dass** die Aufnahmebohrung (22) als mindestens halboffene Aufnahmebohrung (22) ausgebildet ist, welche am Boden des Messerfensters (6) eingebracht ist.

6. Druckmittel gesteuertes Senkwerkzeug (1) nach einem der Ansprüche 1 oder 3 bis 5, **dadurch gekennzeichnet, dass** der gehäuseseitige Zentrierbolzen (23) auswechselbar in der gehäuseseitigen Aufnahmebohrung (22) aufgenommen ist.

7. Druckmittel gesteuertes Senkwerkzeug (1) nach Anspruch 2, **dadurch gekennzeichnet, dass** der Zentrierbolzen rundprofiliert ist und in einer messerseitigen Aufnahmebohrung eingepasst ist und mit dem oberen Teil seines Außenumfangs aus der Aufnahmebohrung herausragt und dort die Zentrierfläche für den Eingriff in die Zentriernut (42) des Messergehäuses (3) bildet.

8. Druckmittel gesteuertes Senkwerkzeug (1) nach einem der Ansprüche 2 oder 7, **dadurch gekennzeichnet, dass** die eine, vertieft in der Fußseite des Messerfensters (6) eingeformte Zentriernut (42) sich über die gesamte Breite des Messerfensters (6) erstreckt.

9. Druckmittel gesteuertes Senkwerkzeug (1) nach einem der Ansprüche 1 bis 8, **dadurch gekennzeichnet, dass** sich bei der Messer-Zentrierung die beiden messerseitigen Anlageflächen (35, 36) der Zentriernut (21, 43) an der komplementären Zylinderfläche des gehäuseseitigen Zentrierbolzens (23, 43) anlegen und dabei das Messer (7) in der Zentrierachse (48) formschlüssig und spielfrei im Messergehäuse (3) zentrieren.

10. Druckmittel gesteuertes Senkwerkzeug (1) nach einem der Ansprüche 1 bis 9, **dadurch gekennzeichnet, dass** das Messer (7) in eingefahrenem Zustand durch eine rückseitig zu senkende Bohrung in einem Werkstück hindurch fährt und im aus dem Messerfenster (6) ausgefahrenen Zustand an der rückseitigen Bohrung eines Werkstücks eine Rückwärtssenkung erzeugt.

11. Druckmittel gesteuertes Senkwerkzeug (1) nach einem der Ansprüche 1 bis 10, **dadurch gekennzeichnet, dass** sich das Messer (7) in axialer Richtung längs der Mittelachse des Lagerbolzens (9) bzw. der Lagerbohrung (16) im Messerfenster (6) zentriert.

12. Druckmittel gesteuertes Senkwerkzeug (1) nach einem der Ansprüche 1 bis 11, **dadurch gekennzeichnet, dass** die Haupt-Zerspanungskräfte des Messers (7) über Anlagestellen des Messers (7) am Messerfenster (6) in das Messergehäuse (3) übertragbar sind.

13. Druckmittel gesteuertes Senkwerkzeug (1) nach einem der Ansprüche 1 bis 12, **dadurch gekennzeichnet, dass** der noch einzig verbleibende, radial wirkende und das Senkergebnis beeinflussende Freiheitsgrad mit der Zentriervorrichtung (21, 23, 42, 43) aufgehoben wird.

14. Druckmittel gesteuertes Senkwerkzeug (1) nach einem der Ansprüche 1 bis 13, **dadurch gekennzeichnet, dass** der Zentrierbolzen (23) bei Verschleiß austauschbar ist.

15. Druckmittel gesteuertes Senkwerkzeug (1) nach einem der Ansprüche 1 bis 14, **dadurch gekennzeichnet, dass** zusätzliche, weitere Zentriervorrichtungen zur Zentrierung des Messers (7) an den Seitenflächen des Messerfensters (6) angeordnet sind.

## Claims

1. Pressure medium-controlled countersinking tool (1) having one or more machining blades (7) arranged in a rotatably driven base body (2) which can be actuated in their pivot position by supplying a pressure medium (13), wherein actuation of the at least one blade (7) takes place via at least one piston-cylinder unit (24, 25) actuated by the pressure medium (13), wherein the at least one blade (7) is pivotably mounted on a bearing bolt (9) forming a pivot axis (9a) and can be pivoted out from a blade window (6) arranged in the blade housing (3), wherein a centring device (21, 23, 42, 43) is arranged between the blade (7) and the blade window (6) of the blade housing (3) at a radial distance (44, 45, 46) from the pivot axis (9a) and in the pivot range of the at least one blade (7), **characterised in that** the centring device (21, 23) consists of a centring groove (21) arranged on the base side on the underside of the blade (7) and which is in positive engagement with a housing-side centring bolt (23) in the machining position and **in that** the centring bolt (23) is profiled to be round and projects with its upper part of its outer circumference from a housing-side receiving bore (22) and forms a complementary centring surface there for engagement in the centring groove (21).

2. Pressure medium-controlled countersinking tool (1) having one or more machining blades (7) arranged in a rotatably driven base body (2) which can be actuated in their pivot position by supplying a pressure medium (13), wherein actuation of the at least one blade (7) takes place via at least one piston-cylinder unit (24, 25) actuated by the pressure medium (13), wherein the at least one blade (7) is pivotably mounted on a bearing bolt (9) forming a pivot axis (9a) and can be pivoted out from a blade window (6) arranged in the blade housing (3), wherein a centring device (21, 23, 42, 43) is arranged between the blade (7) and the blade window (6) of the blade housing (3) at a radial distance (44, 45, 46) from the pivot axis (9a) and in the pivot range of the at least one blade (7), **characterised in that** a centring bolt, which can be engaged in a housing-side transversely running centring groove (42), is arranged on the base side of the blade (7).

3. Pressure medium-controlled countersinking tool (1) according to claim 1, **characterised in that** the centring groove (21) is arranged as a transverse groove on the base side of the blade (7) at the distance (44) from the bearing bore (16).

4. Pressure medium-controlled countersinking tool (1) according to claim 1 or 2, **characterised in that** the centring groove (21) is configured as a transverse groove and the longitudinal extension thereof is parallel to the longitudinal extension of the bearing bolt (9) and the bearing bore (16).

5. Pressure medium-controlled countersinking tool (1) according to one of claims 1, 3 or 4, **characterised in that** the receiving bore (22) is configured as an at least half-open receiving bore (22) which is introduced on the floor of the blade window (6).

6. Pressure medium-controlled countersinking tool (1) according to one of claims 1 or 3 to 5, **characterised in that** the housing-side centring bolt (23) is received replaceably in the housing-side receiving bore (22).

7. Pressure medium-controlled countersinking tool (1) according to claim 2, **characterised in that** the centring bolt is profiled to be round and is fitted in a blade-side receiving bore and with the upper part of its outer circumference projects from the receiving bore and forms the centring surface there for engagement in the centring groove (42) of the blade housing (3).

8. Pressure medium-controlled countersinking tool (1) according to one of claims 2 or 7, **characterised in that** the one centring groove (42) moulded to be recessed in the base side of the blade window (6) extends over the entire width of the blade window (6).

9. Pressure medium-controlled countersinking tool (1) according to one of claims 1 to 8, **characterised in that** during blade centring, the two blade-side contact surfaces (35, 36) of the centring groove (21, 43) rest on the complementary cylinder surface of the housing-side centring bolt (23, 43) and thus centre the blade (7) in the centring axis (48) positively and free of play in the blade housing (3).

10. Pressure medium-controlled countersinking tool (1) according to one of claims 1 to 9, **characterised in that** the blade (7) in the moved-in state moves through a bore in a workpiece to be countersunk on the rear side and in the state moved out from the blade window (6) generates rearward countersinking on the rear-side bore of a workpiece.

11. Pressure medium-controlled countersinking tool (1) according to one of claims 1 to 10, **characterised in that** the blade (7) is centred in axial direction along the central axis of the bearing bolt (9) or the bearing bore (16) in the blade window (6).

12. Pressure medium-controlled countersinking tool (1) according to one of claims 1 to 11, **characterised in that** the main machining forces of the blade (7) can be transferred into the blade housing (3) via contact points of the blade (7) on the blade window (6).

13. Pressure medium-controlled countersinking tool (1) according to one of claims 1 to 12, **characterised in that** the still only remaining, radially acting degree of freedom influencing the countersinking result is eliminated with the centring device (21, 23, 42, 43).

14. Pressure medium-controlled countersinking tool (1) according to one of claims 1 to 13, **characterised in that** the centring bolt (23) can be replaced in the case of wear.

15. Pressure medium-controlled countersinking tool (1) according to one of claims 1 to 14, **characterised in that** additional, further centring devices for centring the blade (7) are arranged on the side surfaces of the blade window (6).

## Revendications

1. Outil d'alésage (1) commandé par un moyen de pression, comprenant un ou plusieurs couteaux (7) d'enlèvement de copeaux disposés dans un corps de base (2) entraîné en rotation, qui sont actionnables dans leur position de pivotement par alimentation d'un moyen de pression (13), dans lequel l'actionnement de l'au moins un couteau (7) s'effectue par l'intermédiaire d'au moins une unité piston-cylindre (24, 25) actionnée par moyen de pression (13), dans lequel l'au moins un couteau (7) est supporté de manière pivotante sur une broche de palier (9) formant un axe de pivotement (9a) et peut être sorti par pivotement d'une fenêtre de couteau (6) disposée dans le boîtier de couteau (3), dans lequel, à distance (44, 45, 46) radialement de l'axe de pivotement (9a) et dans la zone de pivotement de l'au moins un couteau (7), un dispositif de centrage (21, 23, 42, 43) est disposé entre le couteau (7) et la fenêtre de couteau (6) du boîtier de couteau (3), **caractérisé en ce que** le dispositif de centrage (21, 23) est constitué d'une rainure de centrage (21) disposée côté pied du côté inférieur du couteau (7), qui est en prise par complémentarité de forme avec une broche de centrage (23) côté boîtier dans la position d'usinage, et que la broche de centrage (23) est profilée de manière ronde et dépasse avec sa partie supérieure de sa circonférence extérieure d'un alésage de réception (22) côté boîtier et forme à cet endroit une surface de centrage complémentaire pour la prise avec la rainure de centrage (21).

2. Outil d'alésage (1) commandé par un moyen de pression comprenant un ou plusieurs couteaux (7) d'enlèvement de copeaux disposés dans un corps de base (2) entraîné en rotation, qui sont actionnables dans leur position de pivotement par alimentation d'un moyen de pression (13), dans lequel l'actionnement de l'au moins un couteau (7) s'effectue par l'intermédiaire d'au moins une unité piston-cylindre (24, 25) actionnée par le moyen de pression (13), dans lequel l'au moins un couteau (7) est supporté de manière pivotante sur une broche de palier (9) formant un axe de pivotement (9a) et peut être sorti par pivotement d'une fenêtre de couteau (6) disposée dans le boîtier de couteau (3), dans lequel, à distance (44, 45, 46) radialement de l'axe de pivotement (9a) et dans la zone de pivotement de l'au moins un couteau (7), un dispositif de centrage (21, 23, 42, 43) est disposé entre le couteau (7) et la fenêtre de couteau (6) du boîtier de couteau (3), **caractérisé en ce qu'**une broche de centrage est disposée du côté pied du couteau (7), qui peut être amenée en prise avec une rainure de centrage (42) s'étendant transversalement côté boîtier.

3. Outil d'alésage (1) commandé par un moyen de pression selon la revendication 1, **caractérisé en ce que** la rainure de centrage (21) est disposée en tant que rainure transversale du côté pied du couteau (7) à distance (44) de l'alésage de palier (16).

4. Outil d'alésage (1) commandé par un moyen de pression selon la revendication 1 ou 2, **caractérisé en ce que** la rainure de centrage (21) est réalisée en tant que rainure transversale et dont l'extension longitudinale est parallèle à l'extension longitudinale de la broche de palier (9) et de l'alésage de palier (16).

5. Outil d'alésage (1) commandé par un moyen de pression selon l'une des revendications 1, 3 ou 4, **caractérisé en ce que** l'alésage de réception (22) est réalisé en tant qu'alésage de réception (22) au moins semi-ouvert, lequel est introduit sur le fond de la fenêtre de couteau (6).

6. Outil d'alésage (1) commandé par un moyen de pression selon l'une des revendications 1 ou 3 à 5, **caractérisé en ce que** le boulon de centrage (23) côté boîtier est reçu de manière interchangeable dans l'alésage de réception (22) côté boîtier.

7. Outil d'alésage (1) commandé par un moyen de pression selon la revendication 2, **caractérisé en ce que** la broche de centrage est profilée de manière ronde et s'insère dans un alésage de réception côté couteau et dépasse de l'alésage de réception avec la partie supérieure de sa circonférence extérieure et forme à cet endroit la surface de centrage pour la prise avec la rainure de centrage (42) du boîtier de couteau (3).

8. Outil d'alésage (1) commandé par un moyen de pression selon l'une des revendications 2 ou 7, **caractérisé en ce qu'**une rainure de centrage (42) formée en creux dans le côté pied de la fenêtre de couteau (6) s'étend sur la totalité de la largeur de la fenêtre de couteau (6).

9. Outil d'alésage (1) commandé par un moyen de pression selon l'une des revendications 1 à 8, **caractérisé en ce que,** lors du centrage de couteau, les deux surfaces d'appui (35, 36) côté couteau de la rainure de centrage (21, 43) reposent sur la surface cylindrique complémentaire de la broche de centrage (23, 43) côté boîtier et centrent ce faisant le couteau (7) dans la broche de centrage (48) par complémentarité de forme et sans jeu dans le boîtier de couteau (3).

10. Outil d'alésage (1) commandé par un moyen de pression selon l'une des revendications 1 à **9, caractérisé en ce que** le couteau (7) passe, à l'état rentré, à travers un alésage à abaisser côté arrière d'une pièce à usiner et génère, à l'état sorti de la fenêtre de couteau (6), un affaissement vers l'arrière sur l'alésage côté arrière d'une pièce à usiner.

11. Outil d'alésage (1) commandé par un moyen de pression selon l'une des revendications 1 à 10, **caractérisé en ce que** le couteau (7) se centre dans la direction axiale le long de l'axe central de la broche de palier (9) ou de l'alésage de palier (16) dans la fenêtre de couteau (6).

12. Outil d'alésage (1) commandé par un moyen de pression selon l'une des revendications 1 à 11, **caractérisé en ce que** les efforts d'usinage principaux du couteau (7) peuvent être transmis dans le boîtier de couteau (3) par l'intermédiaire de points d'appui du couteau (7) sur la fenêtre de couteau (6).

13. Outil d'alésage (1) commandé par un moyen de pression selon l'une des revendications 1 à 12, **caractérisé en ce que** le seul degré de liberté restant, agissant radialement et influençant le résultat de l'alésage, est supprimé avec le dispositif de centrage (21, 23, 42, 43).

14. Outil d'alésage (1) commandé par un moyen de pression selon l'une des revendications 1 à 13, **caractérisé en ce que** la broche de centrage (23) est remplaçable en cas d'usure.

15. Outil d'alésage (1) commandé par un moyen de pression selon l'une des revendications 1 à 14, **caractérisé en ce que** d'autres dispositifs de centrage supplémentaires pour le centrage du couteau (7) sont disposés sur les surfaces latérales de la fenêtre de couteau (6).
